Europäisches Patentamt

European Patent Office

Office européen des brevets

(19)

(11) **EP 1 496 641 A2**

(12) **EUROPEAN PATENT APPLICATION**

(43) Date of publication:
**12.01.2005 Bulletin 2005/02**

(51) Int Cl.7: **H04L 9/06**

(21) Application number: **04254032.8**

(22) Date of filing: **05.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **07.07.2003 JP 2003271525**
**07.07.2003 JP 2003271524**

(71) Applicant: **SONY CORPORATION**
**Tokyo 141 (JP)**

(72) Inventors:
• **Abe, Jouji, Sony Corporation**
**Tokyo 141 (JP)**
• **Kanamaru, Shoji, Sony Corporation**
**Tokyo 141 (JP)**

(74) Representative: **DeVile, Jonathan Mark, Dr. et al**
**D Young & Co**
**120 Holborn**
**London EC1N 2DY (GB)**

(54) **Cryptographic processing apparatus, cryptographic processing method and computer program**

(57) A cryptographic processing apparatus includes a modulation clock signal generating unit (530) for generating a modulation clock signal based on a random number generated by a random number signal generating unit (520). A data processing unit (501) receives the modulation clock signal and determines a process timing in accordance with the modulation clock signal. The process timing is provided for cryptographic encryption and decryption by the cryptographic processing apparatus. Accordingly, measurements of power consumption of the cryptographic processing apparatus is made more difficult to analyse. Cryptographic processing apparatus and method having an improved security level is thereby provided.

FIG.9

IC MODULE

500

510

CLOCK SIGNAL GENERATION UNIT

530

MODULATION CLOCK SIGNAL GENERATING UNIT

COUNTER

RANDOM NUMBER SIGNAL GENERATION UNIT

540

520

501

CPU

MEMORY (REGISTER)

502

504

RANDOM NUMBER GENERATION UNIT

503

TRANSMISSION/ RECEPTION UNIT

EP 1 496 641 A2

## Description

BACKGROUND OF THE INVENTION

1. Field of the Invention

The present invention relates to cryptographic processing apparatus, cryptographic processing methods and computer programs for executing cryptographic processes.

2. Description of the Related Art

With the recent development in network communications and electronic commerce, security maintenance is becoming an important issue. One of methods of maintaining security is cryptographic technologies. Communications utilizing various encrypting schemes are currently performed in practice.

A system is practically used in which a cryptographic processing module is embedded in a small apparatus such as an IC card and data transmission/reception is performed between the IC card and a reader/writer used as a data reader/writer, and the system executes an authentication process or encrypting and decrypts transmission/reception data.

The cryptographic processing module executes, for example, a data encryption process of inputting a plain text and outputting a cipher text or a decryption process of inputting a cipher text and outputting a plain text. These cryptographic processes include an electric process to be performed by hardware such as semiconductor module constituting the cryptographic processing module. There is, therefore, a fear that keys and algorithms applied to the cryptographic process are analyzed by analyzing the consumption power while the semiconductor module executes the cryptographic process.

For example, attacks on an arithmetic processing unit such as an IC, i.e., cryptanalysis attacks, include a timing attack (TA: Timing Attack) which estimates secret information by analyzing a process time, a simple power analysis (SPA: Simple Power Analysis) which estimates secret information by monitoring a power consumption during a cryptographic process, a differential power analysis (DPA: Differential Power Analysis) which estimates secret information by measuring a consumption power during a cryptographic process for a large amount of data and statistically analyzing the measured data, and other attacks.

A general cryptographic processing apparatus is constituted of a data input unit, a storage unit, a cryptographic processing unit and a data output unit. The apparatus operates in the following manner, for example, when input data is to be encrypted. Namely, a plain text is inputted from the data input unit to the cryptographic processing unit. A processing unit in the cryptographic processing unit for executing a cryptographic processing algorithm such as DES (Data Encryption Standard) processes data in accordance with a predetermined cryptographic algorithm.

Intermediate data ganerated at each execution stage of the cryptographic processing algorithm is sequentially stored in a storage unit, and the intermediate data stored in the storage unit is acquired to execute a cryptographic process in accordance with a predetermined processing order. As a predetermined series of cryptographic processing algorithms is completed by the cryptographic processing unit, thus generated cipher text is outputted from the output unit.

In the cryptographic processing apparatus, a time taken to start a particular encrypting intermediate processing procedure after an encryption process starts is generally constant. A method of implementing a cryptographic algorithm is described in detail in a Non-Patent Document 1 mentioned below.

The cryptographic processing apparatus is associated with a fear that key information and algorithms applied to the cryptographic process are analyzed by applying a cryptanalysis method called as the simple power analysis and the differential power analysis as described above.

The simple power analysis and differential power analysis are cryptanalysis methods which identify secret information such as a cryptographic key held by the cryptographic processing apparatus, by measuring consumption of powers at various timings during the cryptographic process by the cryptographic processing apparatus and by utilizing the characteristics where there is a consumption power difference between when a value held in a semiconductor device such as present memories and registers changes, and when the held value does not change.

Two points can be enumerated as the conditions satisfying that the simple power analysis and differential power analysis function effectively, in which a first point is that the cryptographic processing procedure executed at each timing of measuring a consumption power can be identified, and the second point is that a value of the consumption power measured at each timing definitely reflects a computation result of an encryption process executed in an encryption apparatus.

A conventional cryptographic processing apparatus such as an encryption apparatus, a decryption apparatus and an encryption/decryption apparatus satisfies the above-described two points of conditions so that the simple power analysis and differential power analysis operate effectively, resulting in existence of a problem that a cipher text can be analyzed.

In order to measure this problem, several methods have been proposed. For example, a Patent Document 1 describes a data encrypting method and apparatus aiming at prevention of the differential analysis and linear analysis. According to this Patent Document 1, in the configuration that data is divided into a plurality of blocks and the divided blocks are sequentially encrypted, its configuration is incorporated in which a key applied to a block to be subjected to a cryptographic process is extracted from an intermediate result of the preceding process block, to thereby execute a process applying a different key for each block. As a result, statistical key estimation becomes difficult.

A Patent Document 2 shows the configuration of preventing leakage of the information of a key applied to a cryptographic process. According to the configuration described in this Patent Document 2, encrypted key information is stored in a non-volatile memory, the encrypted key information in the non-volatile memory is decrypted when a power source is turned on, and the decryption result key information is stored in a volatile memory. These operations are applied to the cryptographic process. When the power source is turned off, the key information is actively erased from the volatile memory to prevent leakage of the key information.

A Patent Document 3 mentioned below shows an encryption apparatus having resistance against cryptanalysis through consumption power measurements such as simple power analysis and differential power analysis. According to the configuration described in this Patent Document 3, an intermediate data control means changes intermediate data generated by a cryptographic process, in accordance with a random number, and a cryptographic process is executed in accordance with the intermediate data changed by the random number. It is also made possible to make a final output (cipher text) not dependent upon the random number. With this configuration, a state change in a cryptographic processing device becomes a change based upon the intermediate data changed by a random number. As a result, the cryptanalysis through consumption power measurements such as simple power analysis and differential power analysis is made more difficult.

Further, an Non-Patent Document 2 mentioned below shows a preventive method of making timing matching of waveform difficult by inserting a random timing shift during an execution sequence of a cryptographic process.

As described above, there are various proposals of the countermeasure for leakage of a cryptographic key or algorithm. However, the configuration described in the Patent Document 1 is required to perform a complicated process of extracting intermediate data from an already processed block and generating a new key, so that there is a fear that a problem of a lowered arithmetic processing efficiency and a process delay occurs. The configuration described in the Patent Document 2 does not provide the countermeasure for cryptanalysis through consumption power measurements such as simple power analysis and differential power analysis during execution of a cryptographic process, although it has the effects of preventing leakage of key data itself. Messerges already indicates that the method utilizing a random number described in Patent Document 3 can be attacked by a cryptanalysis method called high-order differential power analysis. For example, the description is given in ["Using Second-Order Power Analysis to Attack DPA Resistant Software", T. S. Messerges, CHES2000].

Although the above-described Non-Patent Document 2 describes that timing matching of waveform can be made difficult by inserting a random timing shift during the execution sequence of a cryptographic process, it does not disclose a specific method of inserting a random timing shift. It does not disclose also a means for solving a performance degradation by timing shift insertion, and cannot be applied to a system which is required to perform a high speed process in a predetermined period.

For example, an IC module for executing a cryptographic process is used vigorously at various gates such as a station ticket gate, at shopping centers and the like, and severely required to realize compactness and process speed-up. It is therefore necessary to have the configuration capable of providing a high speed process without complicating a process algorithm and have resistance against differential power analysis and high-order differential power analysis.

Patent Document 1: Japanese Non-examined Patent Publication No. HEI-9-230786

Patent Document 2: Japanese Non-examined Patent Publication No. HEI-8-504067

Patent Document 3: Japanese Non-examined Patent Publication No. 2000-305453

Non-Patent Document 1: "Applied Cryptography" (written by Bruce Shneier) John Wieley & Sons, Inc., 1996, ISBN 0-471-11709-0, pp. 623-673

Non-Patent Document 2: "DES and Differential Power Analysis", Louis Goubin, Jacques Patarin, CHES99

SUMMARY OF THE INVENTION

Various aspects and features of the present invention are defined in the appended claims.

Embodiments of the present invention relate to cryptographic processing apparatus, cryptographic processing methods and computer programs in which a resistance against cryptanalysis is enhanced by controlling process timings such as a timing of storing intermediate data generated by a cryptographic process in accordance with a modulation clock signal generated based upon a random number.

The present invention has been made in consideration of the above-described problems and aims at providing a cryptographic processing apparatus, a cryptographic processing method and a computer program, capable of reinforcing the difficulty in a cryptanalysis through a simple power analysis, a differential power analysis and a high-order differential power analysis based on detection or the like of a consumption power change caused by a regular process by a cryptographic process sequence, without complicating a process algorithm.

A first aspect of the present invention provides a cryptographic processing apparatus characterized by comprising: a modulation clock signal generating unit for generating a modulation clock signal to be used as a data processing timing control signal; and a data processing unit for receiving the modulation clock signal and determining a process timing in accordance with the input modulation clock signal to execute data processing, wherein the modulation clock signal generating unit has a configuration that the modulation clock signal generating unit generates the modulation clock signal corresponding to a random number signal based on a random number and outputs the modulation clock signal to the data processing unit.

A second aspect of the present invention provides a cryptographic processing method characterized by comprising: a modulation clock signal generating step of generating a modulation clock signal corresponding to a random number based on a random number, the modulation clock signal being used as a data processing timing control signal; and a data processing step of receiving the modulation clock signal and determining a process timing in accordance with the input modulation clock signal to execute data processing.

A third aspect of the present invention provides a computer program for making a cryptographic process be executed on a computer system, the computer program characterized by comprising: a modulation clock signal generating step of generating a modulation clock signal corresponding to a random number based on a random number, the modulation clock signal being used as a data processing timing control signal; and a data processing step of receiving the modulation clock signal and determining a process timing in accordance with the input modulation clock signal to execute data processing.

A fourth aspect of the present invention provides a cryptographic processing apparatus characterized by comprising: a data processing unit for executing data processing of input data; an inverted data generating means for generating inverted data of bit data constituting intermediate data generated through data processing by the data processing unit; and a plurality of data storage units each for storing non-inverted bit data and the inverted bit data corresponding to the intermediate data.

A fifth aspect of the present invention provides a cryptographic processing method characterized by comprising: a data processing step of executing data processing of input data; an inverted data generating step of generating inverted data of bit data constituting intermediate data generated through data processing by the data processing unit; and a data storing step of storing non-inverted bit data and the inverted bit data corresponding to the intermediate data in each of a plurality of data storage units.

A sixth aspect of the present invention provides a computer program for making a cryptographic process be executed on a computer system, the computer program characterized by comprising: a data processing step of executing data processing of input data; an inverted data generating step of generating inverted data of bit data constituting intermediate data generated through data processing by the data processing unit; and a data storing step of storing non-inverted bit data and the inverted bit data corresponding to the intermediate data in each of a plurality of data storage units.

According to the configuration of the present invention, the modulation clock signal is generated in accordance with a signal based on a random number, and a data processing timing is determined in accordance with the modulation clock signal to execute data processing. Accordingly, secret information analysis of an encryption key, a decryption key and the like through measurements of consumption powers in terms of a lapse time of a cryptographic processing apparatus for encrypting and decrypting data, i.e., cryptanalysis based on the power analysis, can be made difficult to thereby realize a cryptographic processing apparatus and method having a high security level.

According to the configuration of the present invention, if a delay amount is shorter than a preset allowable maximum delay time, control is executed in accordance with the modulation clock signal corresponding a random number signal, whereas if the delay time reaches the preset allowable maximum delay time, the control is executed in accordance with a clock signal corresponding to a normal clock signal. Accordingly, generation of an excessive process delay can be prevented and completion of the process in a predetermined period can be guaranteed.

According to the configuration of the present invention, for example, in a cryptographic processing apparatus for executing a common key cryptographic process constituted of a round function unit having a plurality of stages, the timing of storing an F function output at each stage, i.e., the timing of storing an output value of intermediate data output from an Sbox via a substitution unit, and the timing of reading data from registers for the next state process, are determined by random numbers, and after a predetermined allowable maximum delay time, data reading and data writing are executed in accordance with a normal clock signal. Accordingly, the data processing is executed at irregular timings based on a random number before the allowable maximum delay time, so that it is possible to improve resistance against a cryptanalysis method which acquires secret information such as an encryption key and a decryption key through measurements of consumption powers measured in terms of a lapse time. After the predetermined allowable maximum delay time, data writing and data reading are executed in accordance with the normal clock signal so that generation of an excessive process delay can be prevented and completion of a process in a predetermined period can be guaranteed.

According to the configuration of the present invention, a cryptographic processing apparatus and a cryptographic processing method having an improved resistance against various analysis-attacks can be realized without complicating a process algorithm.

According to the configuration of the present invention, a cryptanalysis method of acquiring secret information such as an encryption key and a decryption key by measuring consumption powers of an apparatus during data encryption or decryption, i.e., cryptanalysis through consumption power measurements such as power analysis and differential power analysis, can be made difficult, and in addition application of a high-order differential power analysis can also be made difficult.

BRIEF DESCRIPTION OF THE DRAWINGS

The invention will now be described by way of example with reference to the accompanying drawings, throughout which like parts are referred to by like references, and in which:

FIG. 1 is a diagram showing the basic configuration of a DES cryptographic process;

FIG. 2 is a diagram showing the structure of a conversion unit constituting each round of a round function unit;

FIG. 3 is a diagram showing the structure of an F function;

FIG. 4 is a diagram showing the configuration of a triple DES cryptographic process;

FIG. 5 is a diagram illustrating examples of the structure of the F function having an Sbox and the structure of a cryptographic processing device having resistors as an intermediate data storage unit;

FIG. 6 is a diagram showing an example of the structure of an IC module as a cryptographic process execution device;

FIG. 7 is a diagram illustrating the control of process timings basing upon a clock signal;

FIG. 8 is a diagram showing an example of the clock signal and illustrating the control of process timings by the clock signal;

FIG. 9 is a diagram showing an example (first embodiment) of the structure of an IC module as a cryptographic process execution device according to the configuration of the present invention;

FIGS. 10A to 10E are diagrams showing an example of generating a modulation clock signal and illustrating the control of process timings by the modulation clock signal;

FIG. 11 is a diagram illustrating the control of process timings by the modulation clock signal;

FIG. 12 is a flow chart illustrating the process procedure by a modulation clock signal generation unit;

FIG. 13 is a diagram showing an example (second embodiment) of specific structures of a conversion processing unit of a cryptographic processing apparatus and a data storage structure of registers according to the present invention;

FIG. 14 is a diagram showing an example (third embodiment) of specific structures of a conversion processing unit of a cryptographic processing apparatus and a data storage structure of registers according to the present invention;

FIG. 15 is a diagram showing the configuration of an AES cryptographic process; and

FIG. 16 is a diagram showing an example of the structure of an IC device as a cryptographic process execution device to which the configuration of the present invention is applicable.

DESCRIPTION OF THE PREFERRED EMBODIMENTS

In the following, description will be made on the details of a cryptographic processing apparatus, a cryptographic processing method and a computer program according to the present invention.

Although there are various cryptographic processing algorithms, the cryptographic processing algorithms are broadly classified into a public key cryptographic scheme which sets different keys as an encryption key and a decryption key, e.g., a public key and a secret key, and a common key cryptographic scheme which sets a common key as an encryption key and a decryption key.

In one of the common key cryptographic schemes, a plurality of keys are generated based on one common key, and a cryptographic process is repetitively executed by using a plurality of generated keys. A typical algorithm applying this key generating scheme is a common key block cryptographic scheme.

An algorithm of the common key block cryptography can be divided into a round function unit which executes mainly input data substitution and a key schedule unit which generates keys applied to respective rounds of the round function unit. A main key is inputted to the key schedule unit to generate each key (sub-key) applied to each round of the round function unit, the generated key being applied to each round function unit. A typical scheme of this common key cryptographic scheme is the DES (Data Encryption Standard) used as the U.S.A. standard cryptographic scheme.

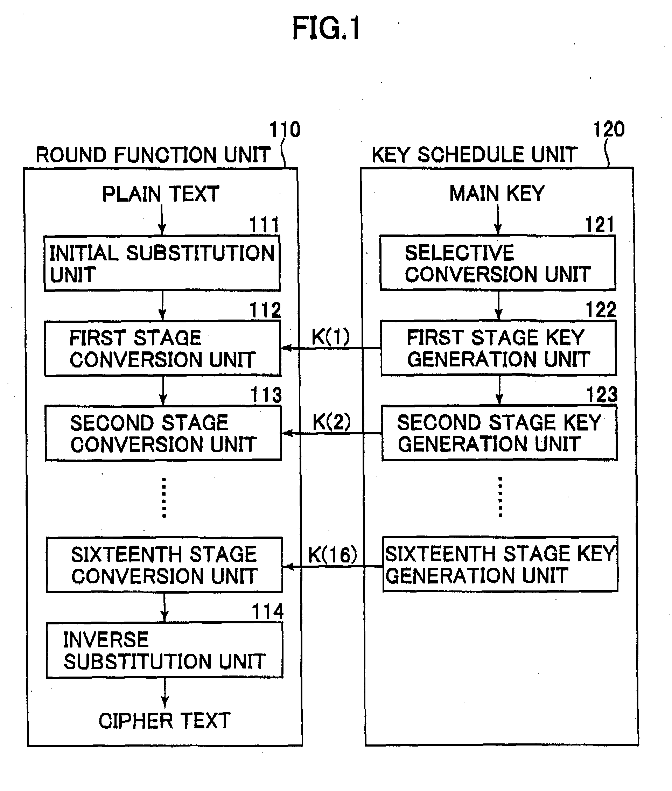

The basic structure of a DES cryptographic process will be described with reference to the accompanying drawings. The DES cryptographic process has the structure that a plain text is converted into a cipher text by simple repetition of a conversion function. FIG. 1 shows a basic structure of the DES cryptographic process. The DES cryptographic process is constituted of a round function unit 110 for executing input data conversion and a key schedule unit 120 for generating a key applied to each round of the round function unit.

In the round function unit 110, a plain text (64 bits) is first divided into L and R each having 32 bits at an initial substitution unit 111. Thus divided 32-bit L and R are inputted to a first stage conversion unit 112 and subjected to a conversion process based upon a key K (1) input from a first stage key generation unit 122 of the key schedule unit 120. A conversion process result is inputted to a next second stage conversion unit 113.

In the key schedule unit 120, first a selective substitution unit 121 removes eight parity bits from an input main key (64 bits) and executes a substitution process of the remaining 56 bits, and the substituted 56 bits are inputted to a first stage key generation unit 122. In the first key generation unit 122, a shift process for an input bit train, removal of parity bits and the like are executed to generate a sub-key K (1) of 48 bits which is outputted to the first stage conversion unit 112 of the round function unit 110. In the first stage key generation unit 122, an upper bit train (28 bits) and a lower bit train (28 bits) obtained by a shift process are outputted to a lower second stage key generation unit 123.

The round function unit has conversion units of 16 stages. Each conversion unit receives an output from the preceding stage conversion unit, executes a conversion process applying a key input from the key schedule unit 120, and outputs a conversion result to a conversion unit of succeeding stages. The converted output by the conversion units at sixteen stages is inputted to an inverse substitution unit 114 whereat a substitution process inverse to the initial substitution unit 111 is executed to output a cipher text.

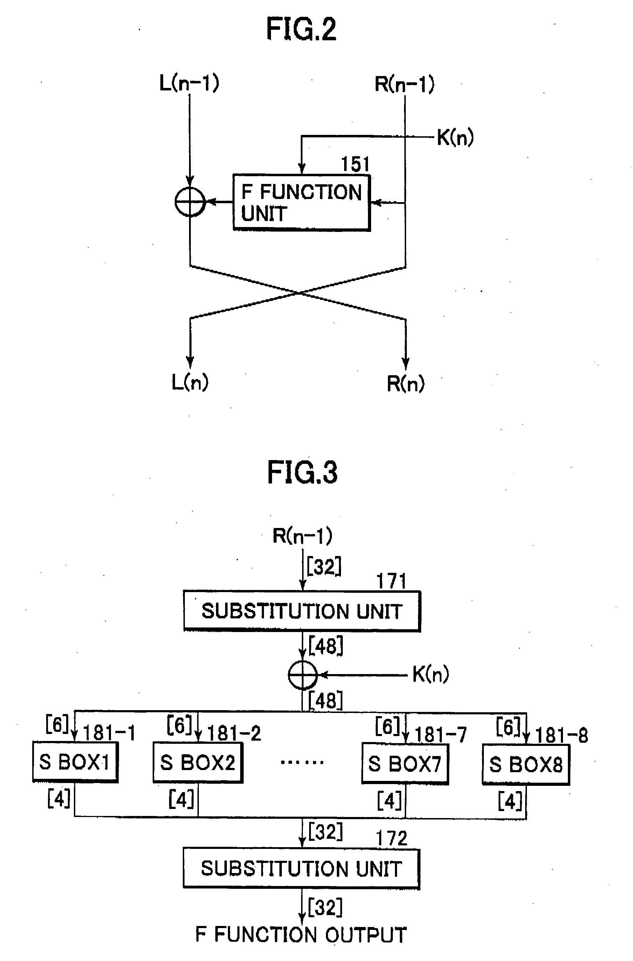

FIG. 2 shows a structure of the conversion unit constituting each round of the round function unit 110. As shown in FIG. 2, the conversion unit receives two inputs L (n-1) and R (n-1) from the conversion unit at the preceding stage (n-1 stage) and receives a key (k (n)) from the key schedule unit. In an F function unit 151, by using the key (k (n)) input from the key schedule unit, the bit train (R(n-1)) input from the preceding conversion unit is subjected to a conversion process, and an exclusive OR is executed between the conversion result and the remaining bit train (L (n-1)) input from the preceding conversion unit to thus generate an output R(n) to the succeeding stage conversion unit. A bit train L(n) obtained from R(n-1) and the bit train R (n) generated by the above-described F function and exclusive OR calculation are inputted to the next stage conversion unit to repeat similar operations.

The structure of the F function is shown in FIG. 3. The F function has a plurality of Sboxes for executing a non-linear process. An input value R (n-1) from the preceding stage of the round function unit is expanded to 48 bits by a substitution unit 171, and an exclusive OR is executed between a bit train of 48 bits and a key (48 bits) input from the key schedule unit. This exclusive OR output is inputted, by 6 bits at a time, to each of the plurality of Sboxes 181-1 to 181-8 for executing the non-linear conversion process. Each Sbox executes the non-linear conversion process of converting 6 bits into 4 bits by using, for example, a conversion table.

Output bits 4 x 8 = 32 from the Sboxes 181-1 to 181-8 are inputted to a substitution unit 172 whereat a bit position exchange process is executed to generate and output an F function output of 32 bits.

As described with reference to FIGS. 1 to 3, the DES cryptographic process is executed by the conversion processes at a plurality of stages (16 stages). The configuration in which the DES cryptographic process is executed by a plurality of times in order to reinforce a cryptographic intensity, e.g., a triple DES cryptographic process of executing the DES cryptographic process three times, is adopted widely in various applications, such as a mutual authentication process for data communication apparatuses via the Internet, and a cryptographic process applied to a mutual authentication process for an IC card and a reader/writer. In order to distinguish the single DES cryptographic process to be executed once from the triple DES cryptographic process, the former is called a single DES cryptographic process.

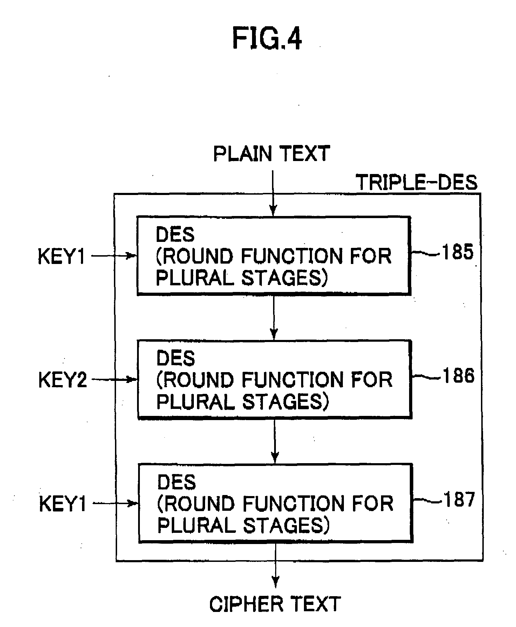

As shown in FIG. 4, with the configuration of the triple DES cryptographic process, the DES cryptographic process described with reference to FIGS. 1 to 3 is repetitively executed three times to generate a cipher text from a plain text. Each of the single DES cryptographic processing units 185, 186 and 187 has the above-described round function of 16 stages and repeats the process by the F function having the Sboxes by sixteen times.

Generally, in the triple DES cryptographic process, the same main key (K1) is used at a first single DES cryptographic processing unit 185 and a last DES cryptographic processing unit 187, and a different main key (K2) is used at a middle DES cryptographic processing unit 186. The cryptographic security can be reinforced by repetitively executing the DES cryptographic process by a plurality of times.

However, the common key cryptographic scheme of this type is associated with the problem of leakage of a key or a cryptographic algorithm by cryptanalysis. First, the simple power analysis (SPA: Simple Power Analysis) will be described. Most of tamper-proof devices such as smart cards are made of logic circuits constituted of transistors. When voltage is applied to a gate, current flows and a power is consumed. A consumption power of a circuit is generally related to an arithmetic operation under execution and a data value. For example, a multiplication calculation requires a larger consumption power when 1 is written than when 0 is written, and the multiplication calculation and a root calculation consume different powers.

Since the power consumption amount changes with an arithmetic operation and a data value, secret information such as a hamming weight can be acquired by observing a change in a consumption power of a device executing an arithmetic operation by using the secret information, so that the entropy can be made small. A method of directly using a change in a consumption power for analysis is called the simple power analysis.

The consumption power of a device can be obtained by inserting a serial resistor between the device and a power supply or the ground and measuring the value of current flowing through the resistor. An arithmetic operation at each stage of the common key cryptography can be checked clearly by measuring the waveform of a consumption power of a smart card executing an actual arithmetic operation of the common key cryptography. By analyzing the consumption power waveform in detail, information such as key register exchange can be obtained.

Next, the differential power analysis (DPA: Differential Power Analysis) will be described. The consumption power of a tamper-proof device is generally dependent upon the contents of an arithmetic operation and the secret information used with the arithmetic operation. However, a change in a consumption power dependent upon these contents is so small that it is generally difficult to distinguish the change from measurement errors, noises and the like.

Kocher, et. al. have proposed a method (Differential Power Analysis) by which an average of a large number of measured values is used to suppress the influence of measurement errors, noises and the like, and a difference from an average of all data is used to eliminate the influence of a power consumption by arithmetic operations, to thereby acquire only a change in a consumption power caused by the used secret information.

Kocher, et. al, present some application examples to DES. First, some bits input to the first or sixteenth stage of the round function unit are estimated, and attention is paid to the value of 1 bit of data estimated to be finally written in a memory from the first or sixteenth stage. In accordance with this value, monitor data of the consumption powers is classified into groups. Next, an average of measurement values of each group is calculated and differences of measurement values from the average are calculated. If the estimations are correct and the attentive bit is used for an arithmetic calculation, a difference of the consumption power becomes large. If the estimation is not correct, a difference cannot be confirmed.

The differential power analysis is executed specifically in accordance with the following procedure (Step 1 to Step 7).

Step 1: An encryption process is monitored m times to obtain changes T1,..., Tm in the consumption power at the sixteenth stage. Then, cipher texts C1,..., Cm are recorded. When the changes in the consumption powers at the sixteenth stage are used for the analysis, information of plain texts is not required. It is sufficient if m is about 1000.

Step 2: A distribution function D (Ks, C) dependent upon a key is selected where Ks is some key information and C is a cipher text. Consider, for example, that attention is paid to the value of the first bit of an output of an Sbox 1 at the last stage and that a partial key of 6 bits supplied to the Sbox is estimated. In this case, the function D is given by the following formula.

$$D(C_1, C_6, K_{16}) = C_1 \oplus SBOX_1(C_6 \oplus K_{16})$$

K 16 is an estimated value of a partial key of 6 bits supplied to the Sbox 1 at the sixteenth stage; C6 is 6 bits of a cipher text subjected to an exclusive OR (XOR) with K16; SBOX1(x) is the first bit of an output result when 6 bits x are supplied to the Sbox 1; and C1 is 1 bit of the cipher text subjected to the exclusive OR (XOR) with the output result of SBOX1.

Step 3: T1,..., Tm are classified into two groups by using the function D as follows.

$$S0 = \{Ti \,|D(\cdot, \cdot, \cdot) = 0\}$$

$$S1 = \{Ti \,| D(\cdot, \cdot, \cdot) = 1\}$$

Next, an average of consumption powers of each group is calculated.

$$A_0 = \frac{1}{|S_0|} \sum_{T_i \in S_0}$$

$$T_1 = \frac{1}{|S_1|} \sum_{T_i \in S_1} T_i$$

,where |S0| + |S1| = m.

Step 4: A difference A0 - A1 is calculated to obtain a power difference signal ÄD as follows.

$$\ddot{A}D = A_0 - A_1$$

Step 5: If the estimated key Ks of the partial key is not correct, D(·, ·, ·) outputs "0" and "1" almost randomly relative to the cipher text. Therefore, if sufficiently large samples are extracted, the value of ÄD approximates to 0. However, in actual the waveform of ÄD does not become perfectly flat because of the interaction with the correct estimated value Ks. If Ks is correct, D(·, ·, ·) takes the same value as the actual value of the attentive bit so that ÄD approximates to the consumption value when the attentive bit is used, by setting m to

∞.

The other data value, measurement errors and the like independent from D(·, ·, ·) approximate to 0. Since the consumption power depends upon the bit value of data, the waveform of D(·, ·, ·) is a pulse in the area the attentive bit is used, and flat in the other area.

Step 6: The above-described operations are repeated to estimate a partial key to be supplied to the Sbox 1. The iteration maximum value is $2^6 = 64$ times.

**[0064]** , Step 7: Similar jobs are performed for the remaining 7 Sboxes to obtain information of 48 bits of the secret key. The key information of the remaining 8 bits is obtained by total search. Although this example is for the DES, it can be applied also to 8 x 8 Sboxes used by Camellia and the like, in a similar manner.

Next, the high-order differential power analysis will be described. Although the above-described differential power analysis analyzes information of samples relating to one event, the high-order differential power analysis analyzes information relating to a plurality of events. The distribution function D can use different weights for respective samples and can classify the samples into two or more groups. The function of this type may surrender many preventive countermeasures and may analyze the secret information even if information of a plain text and a cipher text is incomplete. It is effective that instead of a simple average, another process is used for samples having a characteristic statistical quality.

When the cryptographic process is executed by the conversion process at a plurality of stages (16 stages) described with reference to FIGS. 1 to 4, the process result at each stage, i.e., the intermediate data, is once stored in registers, and then derived from the registers when the process starts at the next stage. Namely, storing the intermediate data into the registers and deriving the intermediate data from the registers are repetitively performed.

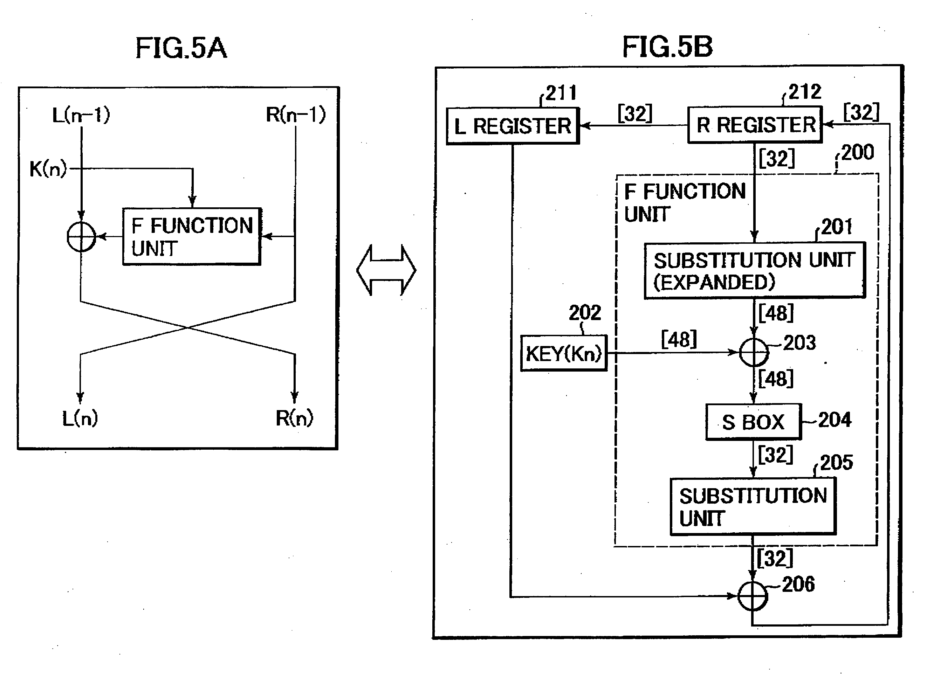

With reference to FIG. 5, a specific process will be described. FIG. 5 shows an example of the F function having an Sbox 204 and an example of the structure of a cryptographic processing device having registers 207 and 208 as the intermediate data storage unit.

When the conversion process is executed at a plurality of stages (16 stages) described with reference to FIGS. 1 to 4, the intermediate data generated at each process stage is stored in the registers 207 and 208, and at the next process stage, the intermediate data is derived from the registers 207 and 208 to execute the process.

FIG. 5 (a) corresponds to the conversion processing unit shown in FIG. 2, and FIG. 5 (b) shows the details of the conversion processing unit and registers as the intermediate data storage unit. The process results at the preceding stage, i.e., L (n-1) and R (n-1) are stored in an L register 211 and an R register 212, and data of 32 bits in the R register is inputted to an F function unit 200. In the substitution unit 201, the data of 32 bits is subjected to expansion/substitution to obtain data of 48 bits. The substitution unit 201 corresponds to the substitution unit 171 shown in FIG. 3.

For the output of the substitution unit 201, a key (k(n)) 202 is supplied from the key schedule unit, and at an exclusive OR (XOR) unit 203 an exclusive OR process is executed and its process result is inputted to the Sbox 204. The Sbox executes a non-linear conversion, and for an output of the Sbox 204, a substitution unit 205 executes a substitution process such as bit exchange. Thereafter, the substitution result is subjected to an exclusive OR process with the value stored in the L register 211, at an exclusive OR (XOR) unit 206. The result of the exclusive OR process is stored in the R register 212 and L register 211. The stored data is derived at the next stage process to repeat similar processes.

In the implementation such as shown in FIG. 5 which does not consider countermeasures for the simple power analysis, differential power analysis and high-order differential power analysis, an output of the F function unit 200 is stored directly in the registers, and the process at the succeeding stage is executed by deriving the data from the registers and in accordance with the derived data.

A device for executing these processes is a logic circuit constituted of transistors, and as described earlier, it consumes a power associated with the executing arithmetic operation and the value of data used. For example, different consumption powers are used when data 0 is written in the register and when data 1 is written in the register. It is therefore possible to analyze the secret information by monitoring a change in a consumption power of the device which repetitively executes intermediate data writing and reading relative to the registers.

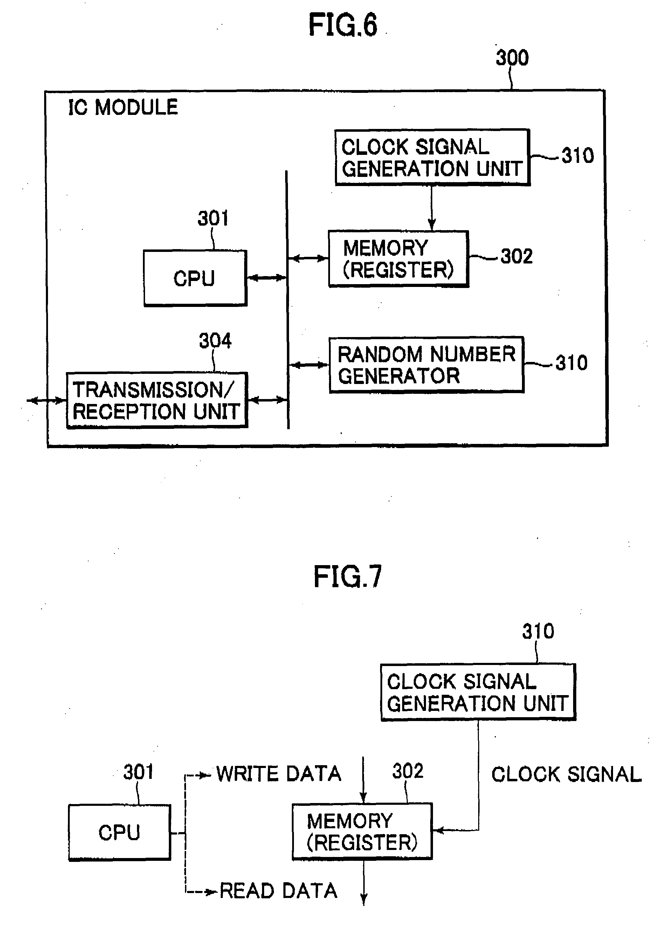

FIG. 6 shows an example of the structure of an IC module 300 to be used as a device for executing the cryptographic process. The above-described cryptographic process can be executed, for example, by a PC, an IC card, a reader/writer and other various information processing apparatuses. The IC module 300 shown in Fig. 6 can be fabricated in these various apparatuses.

A CPU (Central processing Unit) 301 shown in FIG. 6 is a processor for starting and ending a cryptographic process, executing each process in accordance with a cryptographic processing program, controlling data transmission/reception, controlling data transfer among respective constituent units, storing data in a memory (register) 302, reading data from the memory (register) 302 and executing other various processes. Execution timings of various processes to be executed by the processor are controlled by a clock signal generated by a clock signal generation unit 310.

The memory (register) 302 is constituted of a ROM (Read-Only-Memory) for storing programs to be executed by a CPU 301 or fixed data as arithmetic operation parameters, a RAM (Random Access Memory) to be used as a storage area for storing programs to be executed for the process made by the CPU 301 or a working area, and the like. The memory (register) 302 has also a storage area for storing the above-described intermediate data. The memory 302 can be used as the storage area for key data and the like necessary for the cryptographic process.

A random number generation unit 303 executes a process of generating a random number necessary, for example, for generating a key necessary for the cryptographic process.

A transmission/reception unit 304 is a data communication processing unit for executing data communications with an external, and for example, executes data communications with an IC module such as a reader/writer, outputs a cipher text generated in the IC module or inputs data from an external apparatus such as a reader/writer.

As previously described with reference to FIG. 5, the intermediate data generated during the cryptographic process is stored in the registers and read from the registers for the next process. The process timings of these data reading or writing are controlled by the clock signal having a period of a constant cycle.

Namely, as shown in FIG. 7, a clock signal generation unit 310 generates a clock signal having a constant period, and supplies it to the CPU 301 as the processor. The CPU 301 executes a data writing and data reading process relative to the memory (register) 302.

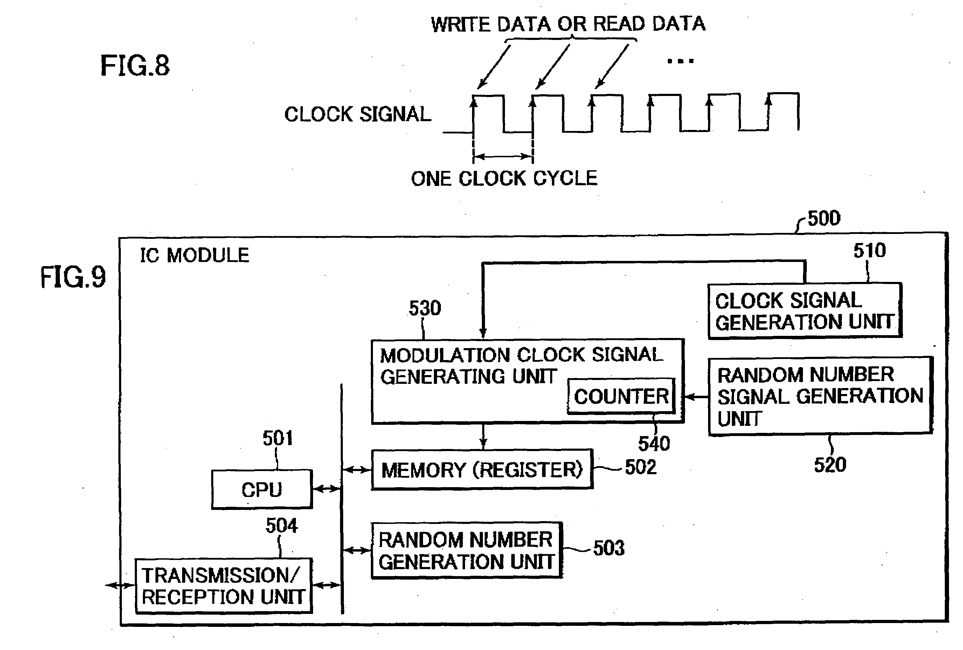

As shown in FIG. 8, the clock signal generated by the clock signal generation unit 310 is a digital waveform signal having a clock cycle of a constant period. For example, the CPU 301 executes a data writing process relative to the memory (register) 302 and a data reading process relative to the memory (register) 302.

Since the time interval of the clock signal generated by the clock signal generation unit 310 is constant, the cryptanalysis method of acquiring secret information such as an encryption key and a decryption key by measuring consumption powers can operate effectively. Namely, by monitoring a change in a consumption power with a time lapse, the data storage timings relative to the registers and the timings of various processes can be analyzed.

The present invention eliminates weak points relative to attacks to be caused by the processes executed in accordance with regular process timings described above. In the configuration of the present invention, the clock signal itself is not used directly as the process execution timings, but a modulation clock signal is generated as a random process execution timing control signal based upon a random number.

FIG. 9 shows an example of the structure of an IC module 500 as a cryptographic process execution device. A CPU (Central processing Unit) 501 shown in FIG. 9 functions as a data processing unit and is a processor for starting and ending a cryptographic process, executing each process in accordance with a cryptographic processing program, controlling data transmission/reception, controlling data transfer among respective constituent units, storing data in a memory (register) 502, reading data from the memory (register) 502 and executing other various processes. Execution timings of various processes to be executed by the processor are controlled by a modulation clock signal generated by a modulation clock signal generation unit 530.

The modulation clock signal generation unit 530 receives a normal clock signal having a constant period from a clock signal generation unit 510 and a random number signal generated by a random number signal generation unit 520, and generates a modulation clock signal from these two signals. The modulation clock signal generation unit 530 has a counter 540 and measures from the counter whether a process delay time is shorter than a predetermined allowable delay time. If the process delay time is shorter than the allowable delay time, the modulation clock signal based on the random number signal is outputted to the CPU 501, and when the delay becomes an upper limit of the allowable delay time, the normal clock signal having the constant period is outputted to the CPU 501. With these processes, the process execution timings are controlled. The details of these processes will be later described.

The memory (register) 502 is constituted of a ROM (Read-Only-Memory) for storing programs to be executed by the CPU 501 or fixed data as arithmetic operation parameters, a RAM (Random Access Memory) to be used as a storage area for storing programs to be executed for the process made by the CPU 501 or a working area, and the like. The memory (register) 502 has also a storage area for storing the above-described intermediate data. The memory 502 can be used as the storage area for key data and the like necessary for the cryptographic process. The storage area for the secret data and the like is preferably made of a memory having a tamper-proof structure.

A random number generation unit 503 executes a process of generating a random number necessary, for example, for generating a key necessary for the cryptographic process.

A transmission/reception unit 504 is a data communication processing unit for executing data communications with an external, and for example, executes data communications with an IC module such as a reader/writer, outputs a cipher text generated in the IC module or inputs data from an external apparatus such as a reader/writer.

In the structure of this embodiment, the timings of various processes to be executed by the CPU 501 as the data processing unit, such as a data storage process relative to the memory (register) 502 and a data reading process relative to the memory (register) 502, are determined in accordance with the modulation clock signal generated by the modulation clock signal generation unit 530.

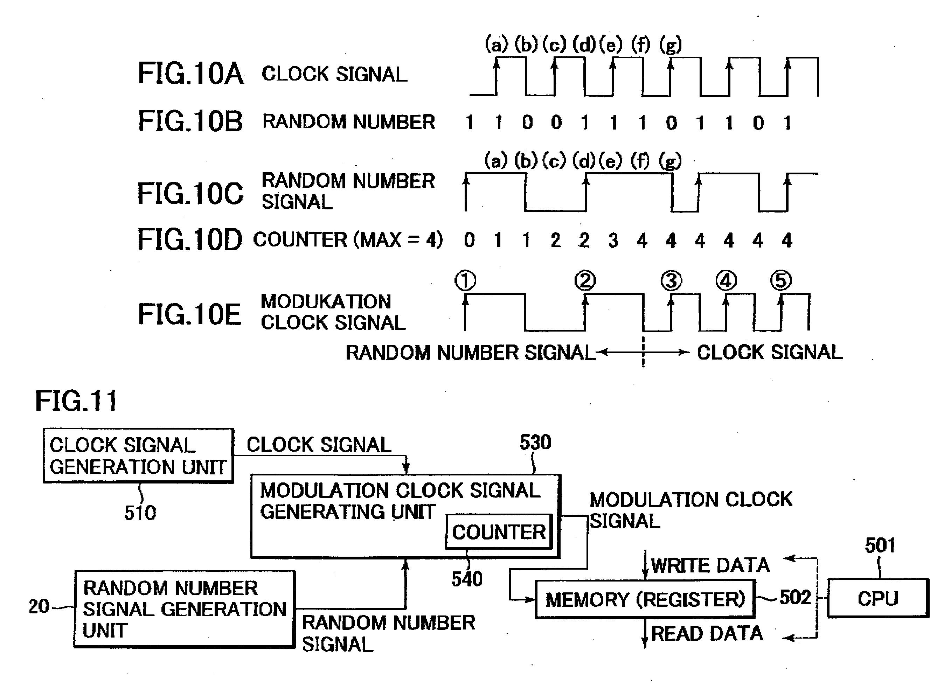

With reference to FIGS. 10A to 10E, description will be made on the modulation clock signal to be generated by the modulation clock signal generation unit 530. The modulation clock signal generation unit 530 receives the normal clock signal having the constant period from the clock signal generation unit 510 and the random number signal generated by the random number signal generation unit 520, and generates, the modulation clock signal from these two signals.

FIG. 10A shows the normal clock signal having the constant period input from the clock signal generation unit 510. An example of a random number generated by the random number signal generation unit 520 is shown at FIG. 10B, and a random number signal generated based upon the random number is shown at FIG. 10C.

In FIG. 10B, an example of random number data [110011101101] is shown. A random number signal at FIG. 10C is a signal taking [High] at a random number [1] and [Low] at a random number [0]. Such random number is randomly generated by the random number generation unit 520, and the random number signal at FIG. 10C is a signal set based upon a randomly generated random number.

The modulation clock signal generation unit 530 receives the normal clock signal having the constant period shown in FIG. 10A from the clock signal generation unit 510 and the random number signal shown in FIG. 10C from the random number signal generation unit 520, and generates the modulation clock signal shown in FIG. 10E from these two signals and outputs it as the control signal for process timings. Various process timings are set to the rising edges (1) to (5) of the modulation clock signal shown in FIG. 10E.

The first half of the modulation clock signal shown in FIG. 10E is the random number signal at FIG. 10C and the second half thereof is a signal corresponding to the clock signal at FIG. 10A. The modulation clock signal generation unit 530 has the counter 540 which measures a delay when a process is executed in accordance with the random number signal at FIG. 10C. Namely, the delay generated by the process based on the random number signal at FIG. 10C is counted relative to the process based on the normal clock signal at FIG. 10A. If the delay is shorter than the preset allowable delay time, the random number signal at FIG. 10C is output as the modulation clock signal, and when the delay reaches the upper limit of the preset allowable delay time, the normal clock signal at FIG. 10A is output as the modulation clock signal. With these processes, an excessive process delay can be prevented and a process completion in a predetermined period can be guaranteed.

In the example shown in FIGS. 10A to 10E, the maximum allowable delay time is set as counter = 4. Namely, until the delay of the number of generated timings of the random number signal at FIG. 10C becomes 4 relative to the normal clock signal at FIG. 10A, the random number signal at FIG. 10C is output as the modulation clock signal, and when the delay reaches 4, the normal clock signal at FIG. 10A is output as the modulation clock signal.

The initial state of the counter FIG. 10D is set to [0], and when a difference is generated between the number of rising or falling edges of the normal clock signal at FIG. 10A and the number of rising or falling edges of the random number signal at FIG. 10C, the counter is counted up. In the example shown in this figure, at each of points at (a), (c), (e) and (f), the normal clock signal at FIG. 10A generates the rising or falling edges, whereas the random number signal at FIG. 10C does not generate the rising or falling edges, and the counter 540 counts up at each of these points.

In the example shown in FIGS. 10A to 10E, the maximum allowable delay time is set as counter = 4. Since the count value of the counter is 4 at the point (f), as shown in FIG. 10E the random number signal at FIG. 10C is output as the modulation clock signal up to the point (f), and when the delay reaches the upper limit of the preset allowable delay time, i.e., at the count = 4, the normal clock signal at FIG. 10A is output as the modulation clock signal. With these processes, the process delay can be suppressed to the clock number = 4 when converted to the number of normal clocks. Accordingly, an excessive process delay can be prevented and a process completion in a predetermined period can be guaranteed.

With reference to FIG. 11, description will be made on the processes of writing data in the registers and reading data from the registers in accordance with the modulation clock signal.

The process of writing data in the memory (register) 502 or reading data from the memory (register) 502 is repetitively executed in the process of storing data based on the Sbox output at each stage of the round function unit having a plurality of stages described with reference to FIGS. 1 to 5 and at the next stage process start time.

The timings of these processes are determined in accordance with the modulation clock signal generated by the modulation clock signal generation unit 530. The CPU 501 acquires the modulation clock signal generated by the modulation clock signal generation unit 530 and executes a data writing process relative to the memory (register) 502 or a data reading process relative to the memory (register) 502 at the process timings determined by the input modulation clock signal, i.e., at the points (1) to (5) shown in FIG. 10E.

The modulation clock signal generation unit 530 receives the normal clock signal having the constant period shown in FIG. 10A, supplied from the clock signal generation unit 510 and the random number signal shown in FIG. 10C, and in accordance with these two signals, generates the modulation clock signal shown in FIG. 10E.

The modulation clock signal generation unit 530 has the counter 540 and measures by using the counter 540 the delay when a process is executed in accordance with the random number signal FIG. 10C. If the delay is shorter than the preset allowable delay time, the random number signal FIG. 10C is output as the modulation clock signal, and when the delay reaches the upper limit of the preset allowable delay time, the normal clock signal FIG. 10A is supplied as the modulation clock signal to the CPU 501 functioning as the data processing unit. The CPU 501 executes a process under the timing control based on the modulation clock signal input from the modulation clock signal generation unit 530. This count process of the delay time prevents an excessive process delay and guarantees a process completion in a predetermined period.

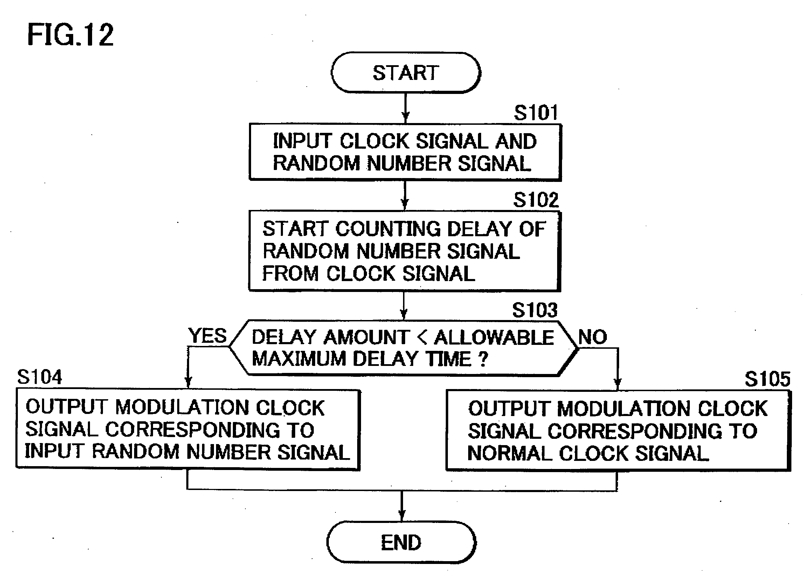

FIG. 12 is a flow chart illustrating a process of generating and outputting the modulation clock signal to be executed by the modulation clock signal generation unit 530. With reference to the flow chart, the process procedure of the modulation clock signal generation unit 530 will be described.

At Step S101, the modulation clock signal generation unit receives the normal clock signal having the constant period (refer to FIG. 10A) and the random number signal (refer to FIG. 10C).

At Step S102, the modulation clock signal is generated based upon the random number signal (refer to FIG. 10C), and the counter in the modulation clock signal generation unit starts counting of a delay of a random number signal relative to the normal clock signal (refer to FIG. 10D).

At Step S103, it is judged whether the delay amount determined by the count number counted by the counter is shorter than the preset allowable maximum delay time. In the example shown in FIG. 10A to 10E, the allowable maximum delay time is set as count number = 4.

If the delay amount is shorter than the preset allowable maximum delay time (judgement at Step S103: Yes), the flow advances to Step S104 whereat the random number signal is outputted as the modulation clock signal. If the delay amount reaches the preset allowable maximum delay time (judgement at Step S103: No), the flow advances to Step S105 whereat the normal clock signal is outputted as the modulation clock signal.

As described above, according to the configuration of the present invention, the process timings are set by adopting the modulation clock signal generated based on a random number so that, for example, the process of storing the intermediate data in the registers or the process of reading data from the registers is controlled in accordance with the modulation clock signal. A process by a regular clock is not, therefore, executed so that it is possible to enhance the resistance against the cryptanalysis based upon the power consumption analysis along the time axis and to provide the cryptographic process having a high security level.

Further, according to the configuration of the present invention, a delay amount is counted with the counter under the control by the random number signal, and after the delay time reaches the allowable maximum delay time, the normal clock signal is outputted to execute the timing process set by the normal clock signal. Accordingly, a system can be realized which can prevent an excessive delay, guarantee a process completion in a predetermined period, and does not generate a process error even in a system required to have a high speed process.

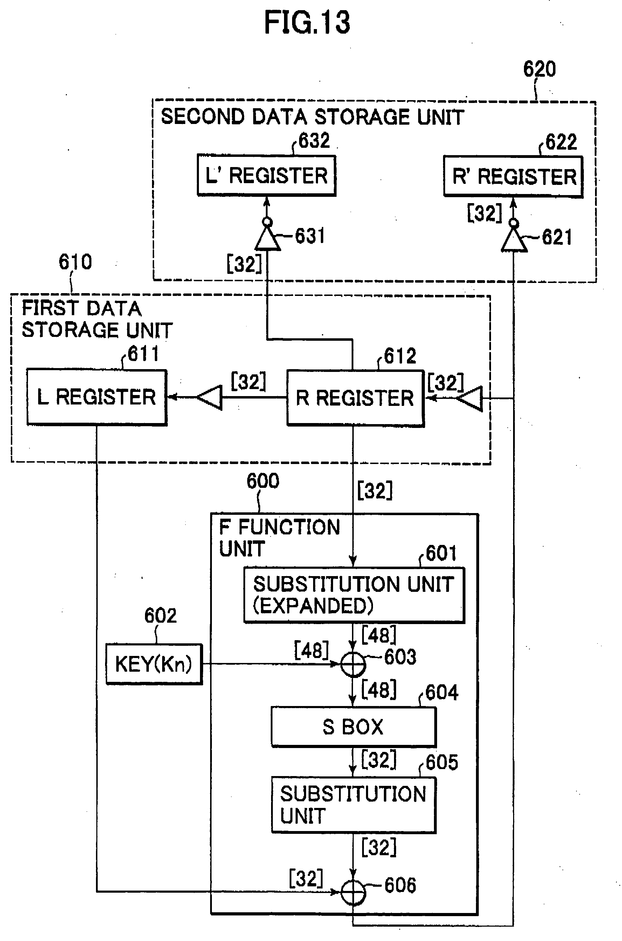

FIG. 13 shows another example of the specific configuration of a data storage structure of a conversion processing unit as the data processing unit and a register as the data storage unit, respectively of a cryptographic processing apparatus according to the present invention. In the cryptographic processing apparatus of the present invention shown in FIG. 13, in order to deal with the above-described simple power analysis, differential power analysis and high-order differential power analysis, an output of an F function unit 600 based upon an output from an Sbox 604 is branched as two outputs by wiring lines. One output without changing its value is input to a first storage unit 610 and stored in an R register 612 and an L register 611. The other output is input to a second data storage unit 620, and after the output value is inverted by inverters 621 and 622, stored in an R' register 622 and an L' register 632.

A power to be consumed when a bit value is stored in the register is proportional to (more strictly, has a large correlation with) a hamming weight of an output of an Sbox 604. Since the data is stored by branching to the R register 612 and L register 611 of the first data storage unit 610 while not changing the output value, and to the R' resistor 622 and L' register 632 of the second data storage unit 620 while inverting the output value, a sum of both hamming weights can be made always constant. It becomes difficult to acquire the information of the hamming weight associated with the secret information by monitoring a change in a consumption power of the above-described device, and to enhance the difficulty in analysis based on a consumption power change.

It is preferable that the non-inverted data and inverted data are stored in the respective registers in parallel at the storage timings without any shift. With this timing control, it becomes difficult to acquire the information of the hamming weight in association with a change in a consumption power of the device along the time axis.

Description will be made on the processes based on the configuration shown in FIG. 13. The configuration in FIG. 13 shows the registers as the intermediate data storage unit and the conversion processing unit including the F function for repetitively executing the conversion process at a plurality of stages for the cryptographic process.

The process results at the preceding stage (n-1 stage), i.e., an L (n-1) and an R (n-1), are stored in the L register 611 and R register 612 of the first data storage unit 610, 32-bit data of the R register is input to the F function unit 600, and in a substitution unit 601, the 32-bit is expanded/converted to 48-bit. The substitution unit 601 corresponds to the substitution unit 171 shown in FIG. 3.

A key (k (n)) 602 from the key schedule unit is applied to an output of the substitution unit 601, and an exclusive OR (XOR) unit 603 executes an exclusive OR arithmetic operation to input the process result to the Sbox 604. The Sbox performs non-linear conversion, and an output of the Sbox 604 is subjected to a substitution process such as bit exchange at a substitution unit 605. Thereafter, at an exclusive OR (XOR) unit 606, the substitution result is subjected to an exclusive OR arithmetic operation with a value stored in the L register 611 of the first data storage unit 610.

The result is stored in the R register 612 and L register 611 of the first data storage unit 610. These stored data are extracted at the next stage process to repeat similar processes. Also in the configuration of this embodiment, an output value from the Sbox 604 via the substitution unit 605 is inverted by the inverter 621 and stored in the R' register 622 of the second data storage unit 620. The value of the bit data stored in the R' register 622 is 32-bit data inverted from the 32-bit data stored in the R register 612.

Further, in correspondence with the 32-bit data stored in the L register 611 of the first data storage unit 610, the bit data is inverted by the inverter 631 and stored in the L' register 632 of the second data storage unit 620. The value of the bit data stored in the L' register 632 is 32-bit date inverted from the 32-bit data stored in the L register 611.

The bit data stored in the R' resistor 622 and L' register 632 of the second data storage unit 620 is not used at the next stage process.

As described above, according to the configuration of this embodiment, the output value from the Sbox 604 via the substitution unit 605 is directly stored in the R register 612 and L register 611 of the first data storage unit 610, and inverted data of the output value is stored in the R' register 622 and L' register 632 of the second data storage unit 620. Accordingly, it is possible to maintain always constant the sum of both hamming weights during the register storage process. It becomes difficult to acquire the information of the hamming weight associated with the secret information and to enhance the difficulty in analysis based on a consumption power change.

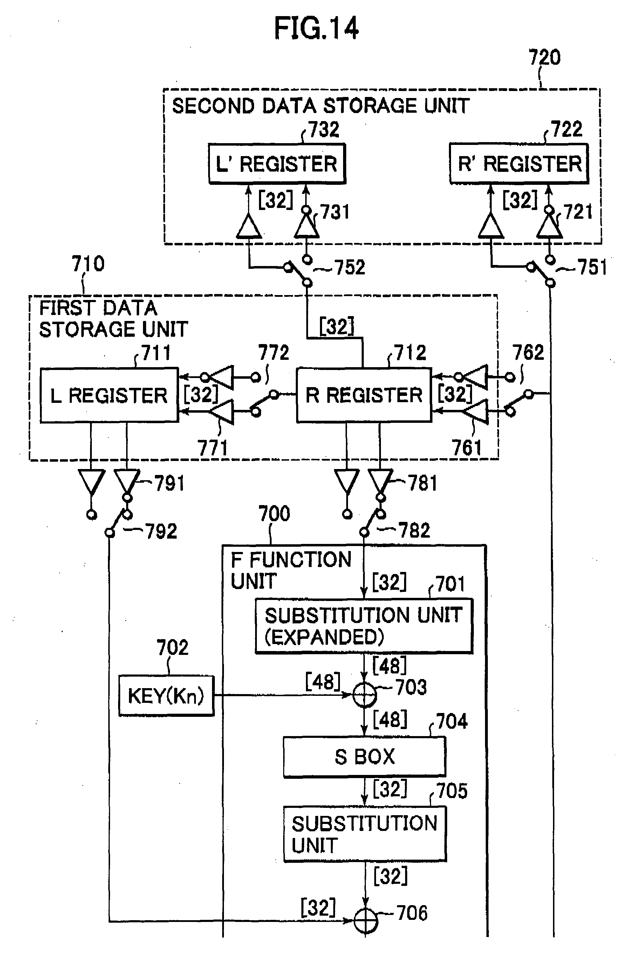

Next, the configuration of the third embodiment of the present invention will be described. FIG. 14 shows an example of the specific configuration of a conversion processing unit and a data storage structure of registers of a cryptographic processing apparatus according to the embodiment. In the configuration of the cryptographic processing apparatus of the present invention shown in FIG. 14, in order to deal with the above-described simple power analysis, differential power analysis and high-order differential power analysis, an output of an F function unit 700 based upon an output from an Sbox 704 is branched as two outputs by wiring lines, similar to the second embodiment, the two outputs being input to a first data storage unit 710 and a second data storage unit 720.

In the third embodiment, either inverted data or non-inverted data can be selectively inputted to the first data storage unit 710 and second data storage unit 720. If the value inputted to the first data storage unit 710 is the non-inverted data, the value inputted to the second data storage area 720 is the inverted data. If the value inputted to the first data storage unit 710 is the inverted data, the value inputted to the second data storage area 720 is the non-inverted data.

Switches 751, 752, 762 and 772 are provided at each register input stage of the first data storage unit 710 and second data storage unit 720 so that it is possible to set whether the inverted data is stored in the registers via inverters 721, 731, 761 and 771 or the non-inverted data is stored in the registers without involvement of the inverters.

The bit data input to each register of the first data storage unit 710 and second data storage unit 720 is 32-bit data. The configuration that inverted bit data or non-inverted bit data of all bits are inputted to the registers may be used, or the configuration that bit data inverted and non-inverted at every second bits of the 32-bit data may be generated and inputted to the registers.

Namely, for example, if the bit train output from an exclusive OR (XOR) unit 706 based on an output from the F function unit 700 is [01001011...], if non-inverted data of all bits is input to an R register 712 of the first data storage unit 710, and if inverted data is stored in an R' register 722 of the second data register unit 720, then the value inputted to the R register 712 of the first data storage unit 710 is the same as that of the output bit train [01001011...], and the value inputted to the R' register 722 of the second data storage unit 720 is an inverted bit train [10110100...].

If the bit train output from the exclusive OR (XOR) unit 706 based on an output from the F function unit 700 is [01001011...], if data inverted and non-inverted at each second bits of 32-bit is inputted to the R register 712 of the first data storage unit 710, and if bit data having a pattern inverted from the bit data inputted to the R register 712 is stored in the R' register 722 of the second data register unit 720, then the value inputted to the R register 712 of the first data storage unit 710 and the value inputted to the R' register 722 of the second data storage unit 720 are as in the following.

An output bit train     : [01001011...]
An R register storage value      : [00011110...]
An R' register storage value      : [11100001...]

In the above description, data with the underline is inverted bit data of the output value.

A bit pair of 0 and 1, or 1 and 0 at each of the 32-bit is stored in the first data storage unit and second data storage unit, in the case that a combination of inverted data and non-inverted data of all-bit data is stored in the first data storage unit and second data storage unit, or in the case that a combination of bit data inverted and non-inverted at every second bits is stored in the first data storage unit and second data storage unit.

A bit pair of 0 and 1, or 1 and 0 at each of the thirty two bits is also stored in the L register 711 of the first data storage 710 unit and the L' register 732 of the second data storage unit 720.

As described earlier, a power to be consumed when a bit value is stored in the register is proportional to a hamming weight of an output of an Sbox. Since a pair of 0 and 1, or 1 and 0 is stored by branching to the R register 712 and L register 711 of the first data storage unit 710 and to the R' register 722 and L' register 732 of the second data storage unit 720, a sum of both hamming weights can be made always constant. It becomes difficult to acquire the information of the hamming weight by monitoring a change in a consumption power of a device and to enhance the difficulty in analysis based on a consumption power change.

In this embodiment, data stored in the registers 711 and 712 of the first data storage unit 710 is used for the next stage process. Therefore, if the inverted bit data is stored in these registers, it is necessary to execute again the inversion process when the data is outputted for the next stage process. To this end, inverters 781 and 791 and switches 782 and 792 are provided at the output stages of the R register 712 and L register 711 of the first data storage unit 710.

If the bit data stored in the R register 712 and L register 711 of the first data storage unit 710 is the inverted data, the bit data inverted again via the inverters 781 and 791 is outputted as the value to be applied to the next stage process. With this process, it is possible to obtain quite the same output result as the case that the bit data inversion process is not executed.

The processes based on the configuration shown in FIG. 14 will be described. Similar to FIG. 13, the configuration in FIG. 14 shows the registers as the intermediate data storage unit and the conversion processing unit including the F function for repetitively executing the conversion process at a plurality of stages for the cryptographic process.

The bit data based on the process results at the preceding stage (n-1 stage) is stored in the L register 711 and R register 712 of the first data storage unit 710. The values are stored as bits inverted or non-inverted by a preset control program.

The 32-bit data of the R register 712 is inputted to the F function unit 700 via the inverter 781 under the control of the switch 782 if the 32-bit data is the inverted data, whereas it is inputted to the F function unit 700 without involvement of the inverter 781 if the storage bits are the non-inverted data.

In a substitution unit 701 of the F function unit 700, the 32-bit is expanded/converted to 48-bit. The substitution unit 701 corresponds to the substitution unit 171 shown in FIG. 3. A key (k (n)) 702 from the key schedule unit is applied to an output of the substitution unit 701, and an exclusive OR (XOR) unit 703 executes an exclusive OR arithmetic operation to input the process result to the Sbox 704. The Sbox 704 performs non-linear conversion, and an output of the Sbox 704 is subjected to a substitution process such as bit exchange at a substitution unit 705. Thereafter, at an exclusive OR (XOR) unit 706, the substitution result is subjected to an exclusive OR arithmetic operation with a value stored in the L register 711 of the first data storage unit 710. The 32-bit data in the L register 711 is inputted to the exclusive OR (XOR) unit 706 via an inverter 791 under the control of an inverter 791 if the storage data is the inverted bits, whereas it is inputted to the exclusive OR (XOR) unit 706 without involvement of the inverter 791 if the storage data is the non-inverted bits.

The result is stored in the R register 712 and L register 711 of the first data storage unit 710, as the inverted bits or non-inverted bits. The bit data having an inverted pattern of the storage bit is stored in the R' register 722 and L' register 732 of the second data storage unit 720. The bit data stored in the R' register 722 and L' register 732 of the second data storage unit 720 is not used at the next stage process.

In the above-described embodiments, description has been made to examples to be applied to the DES cryptographic scheme algorithm. The present invention is also applicable to the AES (Advanced Encryption Standard) cryptography known as the next generation common key cryptography to be replaced with the DES. The AES is the cryptographic process applying a key having a longer bit length of 128, 192 and 256 bits than 64 bits of the DES, and provides strong security.

The AES can execute a process by using both a key length and a block length independently different from 128, 192 and 256 bits, and repetitively executes a plurality of round processes similar to the above-described DES.

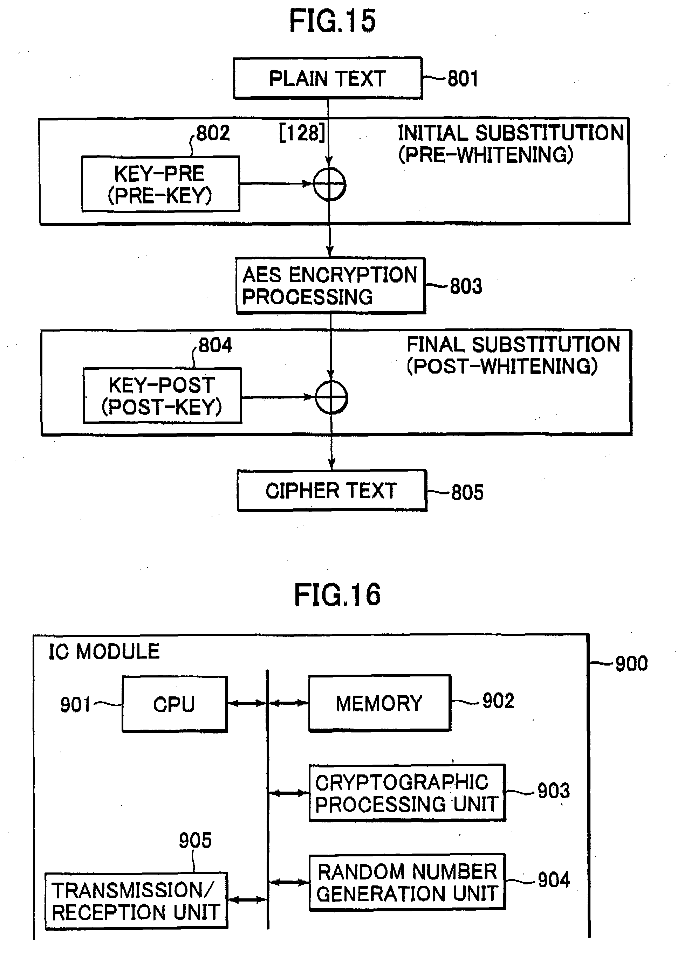

As shown in FIG. 15, in the configuration of the AES cryptographic process, after an initial substitution (Pre-whitening) applying a pre-key (K-pre) 802 is executed for an input plain text 801, an AES cryptographic processing unit 803 constituted of a plurality of rounds executes the AES cryptographic process, and a final substitution (Post-whitening) applying a post key (K-post) 804 is executed finally to output a cipher text. The AES cryptographic process is a cryptographic process having the reinforced difficulty in analysis, i.e., high securities.

Also in this AES cryptographic process, the configuration that inverted data is generated and stored in registers similar to the above-described configuration is used for storing the intermediate data generated at the execution stage of the AES cryptographic process. It is, therefore, possible to always maintain constant the sum of both hamming weights in the register storage process. As a result, it becomes more difficult to acquire the information of the hamming weight by monitoring a change in a consumption power of a device so that the difficulty in analysis based on a consumption power change can be reinforced.

Lastly, an example of the structure of an IC module 900 as a device for executing the above-described cryptographic process is shown in FIG. 16. The above-described process can be executed, for example, by a PC, an IC card, a reader/write and other various information processing apparatuses, and the IC module 900 shown in FIG. 16 can be implemented into these various machines.

A CPU (Central processing Unit) 901 shown in FIG. 16 is a processor for starting and ending a cryptographic process, controlling data transmission/reception, controlling data transfer among respective constituent units, and executing other various programs. A memory 902 is constituted of a ROM (Read-Only-Memory) for storing programs to be executed by the CPU 901 or fixed data as arithmetic operation parameters, and a RAM (Random Access Memory) to be used as a storage area for storing programs to be executed for the process made by the CPU 901 or a working area. The memory 902 has also a storage area for storing the above-described intermediate data. The memory 902 can be used as the storage area for key data and the like necessary for the cryptographic process. The storage area for the data and the like is preferably made of a memory having a tamper-proof structure.

A cryptographic processing unit 903 executes a encryption process, a decryption process and the like in accordance with, for example, the above-described DES and AES. Although a discrete module is used as the cryptographic processing means by way of example, without providing the independent cryptographic module, for example the configuration may be adopted in which a cryptographic processing program is stored in the ROM and the CPU 901 reads and executes each program stored in the ROM.

A random number generation unit 904 executes a process of generating a random number necessary for generating a key necessary for the cryptographic process.

A transmission/reception unit 905 is a data communication processing unit for executing data communications with an external, for example, data communications with the IC module such as a reader/writer, and executes a process of outputting a cipher text generated in the IC module or a process of inputting data from an external machine such as a reader/writer.

In the above-described embodiments, although the counter is used as an essential unit, if it is not necessary to consider a delay amount and a lowered performance, it is not necessary for the counter to measure the delay amount. Therefore, the configuration may be used in which the counter is not provided and the modulation clock signal generated based on the random number signal is always outputted to execute a process in accordance with the modulation clock signal generated based upon the random number.

The present invention has been described in detail with reference to the particular embodiments. However, it is obvious that person skilled in the art can make modifications and alternatives without departing from the gist of the present invention. Namely, the present invention has been disclosed by using illustrative examples and is not limited by the disclosed embodiments. In order to judge the gist of the present invention, Claims described in the start of this specification should be considered.

A series of processes described in the specification can be executed by hardware, software or a composite configuration of both. If a process is to be executed by software, a program recording a process sequence is installed in a memory of a computer built in dedicated hardware and executed, or the program is installed in a memory of a general computer capable of executing various processes and executed.

For example, the program may be stored in advance in a hard disc or a ROM (Read Only Memory) as a recording medium. Alternatively, the program may be stored temporarily or permanently in a removable recording medium such as a flexible disc, a CD-ROM (Compact Disc Read Only Memory), an MO (Magneto-optical) disc, a DVD (Digital Versatile Disc), a magnetic disc and a semiconductor memory. The removable recording medium of this type can be supplied as so-called package software.

The program may be installed in a computer from the above-described removable recording medium, wireless-transferred to a computer from a download site, or wired-transferred to a computer via a network such as a LAN (Local Area Network) and the Internet. The computer receives the program transferred in this manner and installs it in a built-in recording medium such as a hard disc.

Various processes described in the specification may be executed not only time sequentially in accordance with the description but also in parallel or independently in accordance with a processing ability of an apparatus executing a process or when necessary. The system in this specification is intended to mean logical collective configurations of a plurality of apparatuses, and is not limited to a system in which each apparatus with each configuration is accommodated in the same housing.

The present invention is applicable to a device for executing an authentication process and a cryptographic process, e.g., an IC card having a cryptographic processing module or other cryptographic processing apparatuses. By adopting the configuration of the present invention, it becomes difficult to tamper a cryptographic processing key and an algorithm in an IC module through power analysis, and to prevent an excessive process delay. The configuration of the present invention can provide a device or apparatus having a cryptographic processing execution function having a high security level.

Various respective aspects and features of the invention are defined in the appended claims. Features from the dependent claims may be combined with features of the independent claims as appropriate and not merely as explicitly set out in the claims.

**Claims**

1. A cryptographic processing apparatus comprising:

    a modulation clock signal generating unit for generating a modulation clock signal to be used as a data processing timing control signal; and a data processing unit for receiving the modulation clock signal and determining a process timing in accordance with the input modulation clock signal to execute data processing, wherein;
    said modulation clock signal generating unit generates the modulation clock signal corresponding to a random number signal based on a random number and outputs the modulation clock signal to said data processing unit.

2. The cryptographic processing apparatus as cited in claim 1, further comprising:

    a clock signal generating unit for generating normal clock signal having a constant period; and
    a counter for measuring a delay amount of the random number signal relative to the normal clock signal, wherein;
    said modulation clock signal generation unit outputs said modulation clock signal corresponding to the random number signal to said data processing unit, when the delay measured by said counter is shorter than the preset allowable delay time, and outputs said modulation clock signal corresponding to said normal clock signal to said data processing unit when the delay reaches the upper limit of the preset allowable delay time.

3. The cryptographic processing apparatus as cited in claim 1, wherein;
    said data processing unit determines timing for processing of storing intermediate data generated upon cryptographic processing to a register or timing for reading process of the intermediate data to be applied upon execution of the cryptographic processing from the register in accordance with the modulation clock signal.

4. The cryptographic processing apparatus as cited in claim 1, wherein;
    said cryptographic processing apparatus is a cryptographic processing apparatus for executing the cryptographic processing in accordance with a common key cryptographic system that employs plural stages of round function units; and
    said data processing unit determines timing for processing of storing intermediate data generated at the plural stages of round function units to a register or timing for reading process of the intermediate data to be applied upon processing at the plural stages of round function units from the register in accordance with the modulation clock signal.

5. A cryptographic processing method comprising:

    a modulation clock signal generating step of generating a modulation clock signal corresponding to a random number based on a random number, the modulation clock signal being used as a data processing timing control signal; and
    a data processing step of receiving the modulation clock signal and determining a process timing in accordance with the input modulation clock signal to execute data processing.

6. The cryptographic processing method as cited in claim 5, further comprising:

    a clock signal generating step of generating normal clock signal having a constant period; and
    a delay amount measuring step of measuring the delay amount of the random number signal relative to the normal clock signal, wherein;
    said modulation clock signal generation step sets said modulation clock signal corresponding to the random number signal as a clock signal to be outputted to said data processing unit, when the delay measured by said counter is shorter than the preset allowable delay time, and outputs said modulation clock signal corresponding to said normal clock signal to said data processing unit when the delay reaches the upper limit of the preset allowable delay time.

7. The cryptographic processing method as cited in claim 5, wherein;
    said data processing step determines timing for processing of storing intermediate data generated upon cryptographic processing to a register or timing for reading process of the intermediate data to be applied upon execution of the cryptographic processing from the register in accordance with the modulation clock signal.

8. The cryptographic processing method as cited in claim 5, wherein;

said cryptographic processing step is a cryptographic processing step for executing the cryptographic processing in accordance with a common key cryptographic system that employs plural stages of round function units; and

said data processing step determines timing for processing of storing intermediate data generated at the plural stages of round function units to a register or timing for reading process of the intermediate data to be applied upon processing at the plural stages of round function units from the register in accordance with the modulation clock signal.

9. A computer program for making a cryptographic process be executed on a computer system, said computer program comprising:

a modulation clock signal generating step of generating a modulation clock signal corresponding to a random number based on a random number, the modulation clock signal being used as a data processing timing control signal; and

a data processing step of receiving the modulation clock signal and determining a process timing in accordance with the input modulation clock signal to execute data processing.

10. A cryptographic processing apparatus comprising:

a data processing unit for executing data processing of input data;

an inverted data generating means for generating inverted data of bit data constituting intermediate data generated through data processing by the data processing unit; and

a plurality of data storage units each for storing non-inverted bit data and the inverted bit data corresponding to the intermediate data.

11. The cryptographic processing apparatus as cited in claim 10, wherein;

said cryptographic processing apparatus is a cryptographic processing apparatus for executing the cryptographic processing in accordance with a common key cryptographic system that employs plural stages of round function units; and

said data processing unit includes plural stages of data conversion units; and

said intermediate data are output data at each stage of said data conversion units.

12. The cryptographic processing apparatus as cited in claim 10, wherein;

said plurality of data storage units comprises;

a first data storage unit for storing bit data constituting said intermediate data without inversion; and

a second data storage unit for storing all bit data constituting said intermediate data with inversion.

13. The cryptographic processing apparatus as cited in claim 10, wherein;

said plurality of data storage units comprises;

a first data storage unit for storing data inverted or non-inverted data bit by bit regarding the bit data constituting said intermediate data; and

a second data storage unit for storing data inverted bit by bit of the bit data stored in the first data storage unit regarding the bit data constituting said intermediate data.

14. The cryptographic processing apparatus as cited in claim 10, wherein;

said inverted data generating means is an inverter; and

one of said plurality of data storage units stores inverted data through the inverter.

15. The cryptographic processing apparatus as cited in claim 10, further comprising:

output data inversion processing means at an output stage of one of said plurality of data storage units as intermediate data storage means for outputting data to said data processing unit.

16. The cryptographic processing apparatus as cited in claim 10, wherein;

said cryptographic processing apparatus is configured to have a construction for executing storing processing for non-inverted data and inverted data of the intermediate data so as to constantly keep sum of the humming weight at data storing processing relative to said plurality of data storage units.

17. A cryptographic processing method comprising:

a data processing step of executing data processing of input data;

an inverted data generating step of generating inverted data of bit data constituting intermediate data generated through data processing by the data processing unit; and

a data storing step of storing non-inverted bit data and the inverted bit data corresponding to the intermediate data in each of a plurality of data storage units.

**18.** The cryptographic processing method as cited in claim 17, wherein;

said cryptographic processing method is a cryptographic processing method for executing the cryptographic processing in accordance with a common key cryptographic system that employs plural stages of round function units; and

said data processing step includes plural stages of data conversion steps; and

said intermediate data are output data at each stage of said data conversion steps.

**19.** The cryptographic processing method as cited in claim 17, wherein;

said plurality of data storage steps comprises;

a first data storage step for storing bit data constituting said intermediate data without inversion; and

a second data storage step for storing all bit data constituting said intermediate data with inversion.

**20.** The cryptographic processing method as cited in claim 17, wherein;

said data storage step comprises;

a first data storage step for storing data inverted or non-inverted data bit by bit regarding the bit data constituting said intermediate data; and

a second data storage step for storing data inverted bit by bit of the bit data stored at the first data storage step regarding the bit data constituting said intermediate data.

**21.** The cryptographic processing method as cited in claim 17, wherein;

said cryptographic processing method is configured to execute re-inversion processing of the stored data when the stored data in the data storage unit is the inverted data and also the data is to be adapted to the data processing; and

said data processing step executes data processing to said re-inverted data.

**22.** The cryptographic processing method as cited in claim 17, wherein;

said cryptographic processing method is configured to execute storing processing for non-inverted data and inverted data of the intermediate data so as to constantly keep sum of the humming weight at data storing processing relative to said plurality of data storage units.

**23.** A computer program for making a cryptographic process be executed on a computer system, the computer program comprising:

a data processing step of executing data processing of input data; an inverted data generating step of generating inverted data of bit data constituting intermediate data generated through data processing by the data processing unit; and

a data storing step of storing non-inverted bit data and the inverted bit data corresponding to the intermediate data in each of a plurality of data storage units,

# FIG.1

ROUND FUNCTION UNIT 110

PLAIN TEXT

**111**
INITIAL SUBSTITUTION UNIT

**112**
FIRST STAGE CONVERSION UNIT

**113**
SECOND STAGE CONVERSION UNIT

⋮

SIXTEENTH STAGE CONVERSION UNIT

**114**
INVERSE SUBSTITUTION UNIT

CIPHER TEXT

KEY SCHEDULE UNIT 120

MAIN KEY

**121**
SELECTIVE CONVERSION UNIT

**122**
FIRST STAGE KEY GENERATION UNIT

**123**
SECOND STAGE KEY GENERATION UNIT

⋮

SIXTEENTH STAGE KEY GENERATION UNIT

K(1)
K(2)
K(16)

# FIG.2

# FIG.3

# FIG.4

PLAIN TEXT

TRIPLE-DES

KEY1 → DES (ROUND FUNCTION FOR PLURAL STAGES) ~185

KEY2 → DES (ROUND FUNCTION FOR PLURAL STAGES) ~186

KEY1 → DES (ROUND FUNCTION FOR PLURAL STAGES) ~187

CIPHER TEXT

# FIG.5A

# FIG.5B

EP 1 496 641 A2

## FIG.6

**300**

IC MODULE

CLOCK SIGNAL
GENERATION UNIT — 310

301

CPU

MEMORY
(REGISTER) — 302

304

TRANSMISSION/
RECEPTION UNIT

RANDOM NUMBER
GENERATOR — 310

## FIG.7

310

CLOCK SIGNAL
GENERATION UNIT

301

CPU

→ WRITE DATA

302

MEMORY
(REGISTER)

CLOCK SIGNAL

→ READ DATA

## FIG.8

WRITE DATA OR READ DATA

CLOCK SIGNAL

ONE CLOCK CYCLE

## FIG.9

500

IC MODULE

510

CLOCK SIGNAL
GENERATION UNIT

530

MODULATION CLOCK SIGNAL
GENERATING UNIT

COUNTER

RANDOM NUMBER
SIGNAL GENERATION
UNIT

540

520

501

MEMORY (REGISTER) — 502

CPU

504

RANDOM NUMBER
GENERATION UNIT — 503

TRANSMISSION/
RECEPTION UNIT

EP 1 496 641 A2

23

FIG.10A CLOCK SIGNAL

(a) (b) (c) (d) (e) (f) (g)

FIG.10B RANDOM NUMBER  1  1  0  0  1  1  1  0  1  1  0  1

FIG.10C RANDOM NUMBER SIGNAL

(a) (b) (c) (d) (e) (f) (g)

FIG.10D COUNTER (MAX = 4)  0  1  1  2  2  3  4  4  4  4  4  4

FIG.10E MODUKATION CLOCK SIGNAL

① ② ③ ④ ⑤

RANDOM NUMBER SIGNAL ←——→ CLOCK SIGNAL

FIG.11

| CLOCK SIGNAL GENERATION UNIT | CLOCK SIGNAL |
| 510 |

530

MODULATION CLOCK SIGNAL GENERATING UNIT

COUNTER

540

MODULATION CLOCK SIGNAL

20 — RANDOM NUMBER SIGNAL GENERATION UNIT

RANDOM NUMBER SIGNAL

↓ WRITE DATA

501

MEMORY (REGISTER) — 502

CPU

↓ READ DATA

EP 1 496 641 A2

# FIG.12

START

↓

S101 INPUT CLOCK SIGNAL AND RANDOM NUMBER SIGNAL

↓

S102 START COUNTING DELAY OF RANDOM NUMBER SIGNAL FROM CLOCK SIGNAL

↓

S103 DELAY AMOUNT < ALLOWABLE MAXIMUM DELAY TIME ?

YES → S104 OUTPUT MODULATION CLOCK SIGNAL CORRESPONDING TO INPUT RANDOM NUMBER SIGNAL

NO → S105 OUTPUT MODULATION CLOCK SIGNAL CORRESPONDING TO NORMAL CLOCK SIGNAL

↓

END

# FIG.13

620

SECOND DATA STORAGE UNIT

632
L' REGISTER

622
R' REGISTER

631

[32]

621

[32]

610

FIRST DATA
STORAGE UNIT

611
L REGISTER

[32]

612
R REGISTER

[32]

[32]

600

[32]

F FUNCTION
UNIT

601
SUBSTITUTION UNIT
(EXPANDED)

602
KEY(Kn)

[48]

[48]

603

[48]

604
S BOX

[32]

605
SUBSTITUTION
UNIT

[32]

[32]

[32]

606

# FIG.14

# FIG.15

PLAIN TEXT —801

INITIAL SUBSTITUTION
(PRE-WHITENING)

802

KEY-PRE
(PRE-KEY)

[128]

⊕

AES ENCRYPTION
PROCESSING —803

FINAL SUBSTITUTION
(POST-WHITENING)

804

KEY-POST
(POST-KEY)

⊕

CIPHER TEXT —805

# FIG.16

IC MODULE —900

901— CPU ⟷ MEMORY —902

CRYPTOGRAPHIC
PROCESSING UNIT —903

905

TRANSMISSION/
RECEPTION UNIT ⟷ RANDOM NUMBER
GENERATION UNIT —904